# FASCICULE DE BREVET EUROPEEN

(11) **EP 0 408 414 B1**
(45) Date de publication et mention de la délivrance du brevet: **31.08.1994**
(21) Numéro de dépôt: 90401854.6
(22) Date de dépôt: 28.06.1990
(51) Int. Cl.: B26F 3/04, F42B 15/38

(54) **Procédé et dispositif pour la découpe d'une pièce au moyen d'au moins deux cordeaux pyrotechniques**
Verfahren und Vorrichtung zum Werkstückschneiden mittels mindestens zwei Sprengladungen
Method and apparatus for cutting a workpiece using at least two explosive charges

(30) Priorité: 12.07.1989 FR 8909422
(43) Date de publication de la demande: 16.01.1991
(73) Titulaire: AEROSPATIALE Société Nationale Industrielle, 75781 Paris Cédex 16 (FR)
(72) Inventeur: Pernon, Jean, F-78510 Triel sur Seine (FR); Jouanne, Gael, F-78500 Sartrouville (FR); Fontaine, Laurent, F-92300 Levallois Perret (FR)
(74) Mandataire: Bonnetat, Christian

(56) Documents cités:
- FR-A- 1 177 197
- FR-A- 1 255 524
- US-A- 2 587 243
- US-A- 3 185 090
- US-A- 3 453 960
- PETROLEUM ENGINEER INTERNATIONAL. vol. 50, no. 4, avril 1978, DALLAS US pages 24 - 34; William J. Carter: "New Developments In Shaped Charge Technology"

## Description

La présente invention concerne un procédé et un dispositif pour la découpe d'une pièce au moyen d'au moins deux cordeaux pyrotechniques à découpe directive.

On connaît déjà des cordeaux pyrotechniques à découpe directive constitués par exemple par une gaine de plomb ou d'aluminium, renfermant une âme d'explosif pulvérulent, par exemple de l'hexogène.

Un tel cordeau pyrotechnique présente une section en forme de croissant et, usuellement, il est appliqué par ses cornes contre la pièce à découper, de sorte que la concavité dudit cordeau est dirigée vers celle-ci. Lorsque un tel cordeau est actionné par un détonateur, il émet une projection directive de particules métalliques en fusion, selon le principe des charges creuses, dans son plan longitudinal médian. Il peut ainsi découper ladite pièce le long dudit cordeau.

Ainsi, dans ces cordeaux connus, le plan de découpe est confondu avec le plan médian longitudinal dudit cordeau.

De tels cordeaux pyrotechniques peuvent être utilisés à de nombreuses applications de découpe. Toutefois, ils sont avantageusement utilisés dans les lanceurs spatiaux et les stations orbitales pour, par exemple, séparer des étages ou des modules les uns des autres.

Puisque, dans de telles applications, il est particulièrement important que la séparation ait lieu en temps voulu, il est usuel, à des fins de redondance, de prévoir deux cordeaux parallèles, appliqués sur la même pièce voir, en particulier, l'état de la technique US-A-3 185 090. Ainsi, si l'un des cordeaux ne fonctionne pas, l'autre permet d'obtenir la séparation.

En revanche, si les deux cordeaux fonctionnent, il en résulte que la bande intermédiaire qu'ils ménagent entre eux est découpée et séparée des deux autres parties du véhicule spatial. Cette pièce intermédiaire risque donc de polluer l'espace au voisinage de l'orbite considéré pour le vaisseau spatial.

Afin de remédier à cet inconvénient, on a déjà prévu de relier cette bande intermédiaire à l'une des deux parties de la pièce à séparer. Mais cela oblige à prévoir une liaison mécanique entre ladite bande intermédiaire et ladite partie de pièce, liaison qui doit éventuellement pouvoir être rompue dans le cas où le cordeau associé a fonctionné alors que l'autre cordeau n'a pas été capable d'assurer la découpe.

Il en résulte donc un système mécanique compliqué. De plus, un tel système oblige à prévoir un dispositif d'initiation pour chacun des deux cordeaux pyrotechniques.

La présente invention a pour objet de remédier à ces inconvénients.

Elle concerne un procédé et un dispositif pour la découpe d'une pièce au moyen de deux cordeaux pyrotechniques à découpe directive, ne nécessitant aucun organe de liaison mécanique compliqué et permettant de n'utiliser qu'un seul système d'initiation pour les deux cordeaux.

A cette fin, selon l'invention, le procédé pour la découpe d'une pièce au moyen d'au moins deux cordeaux pyrotechniques à découpe directive, est remarquable en ce que lesdits cordeaux sont orientés obliquement par rapport à ladite pièce, de façon que leurs plans de découpe convergent vers ladite pièce et se coupent sur celle-ci.

Ainsi, les deux cordeaux peuvent être initiés simultanément par le même dispositif d'initiation. S'ils fonctionnent tous les deux, on est assuré que la pièce est découpée sans qu'il en résulte l'apparition d'une bande intermédiaire. Il en est de même si un seul d'entre eux fonctionne. On voit par ailleurs que, puisque les plans de découpe des cordeaux sont obliques, il n'y a aucun risque pour qu'un desdits cordeaux soit détruit par l'autre.

Lesdits cordeaux peuvent être disposés d'un même côté de la pièce. En variante, ils peuvent également être disposés de part et d'autre de celle-ci.

Dans le cas où l'on utilise deux cordeaux pyrotechniques, il est avantageux que les plans de découpe desdits cordeaux soient inclinés d'au moins approximativement 45° par rapport à ladite pièce.

Notamment dans le cas où lesdits cordeaux sont disposés d'un même côté de la pièce, il est avantageux que ceux-ci soient disposés dans un même boîtier.

Les figures du dessin annexé feront bien comprendre comment l'invention peut être réalisée. Sur ces figures, des références identiques désignent des éléments semblables.

La figure 1 est une vue en coupe d'un premier mode de mise en oeuvre de l'invention.

La figure 2 montre, également en coupe, une variante de réalisation de mise en oeuvre de l'invention.

Sur ces figures, on a représenté en coupe une pièce 1, par exemple une plaque ou une virole, devant être séparée en deux parties 1a et 1b le long d'une ligne de découpe 2. Cette ligne 2 est orthogonale au plan des figures.

Pour ce faire, selon l'invention, on utilise l'un ou l'autre des dispositifs montrés par les figures.

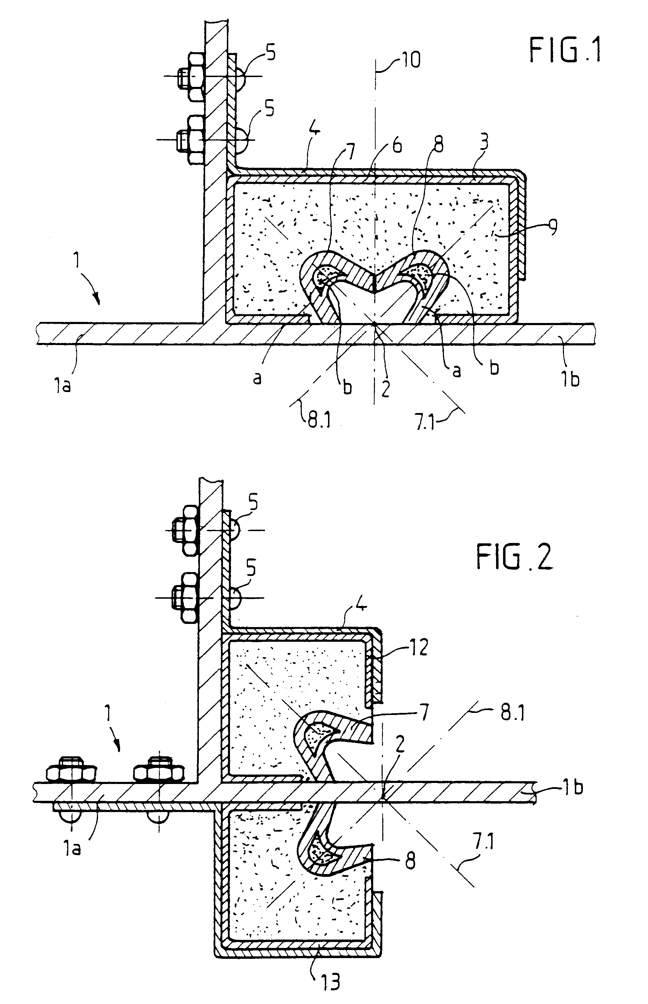

Dans le dispositif de la figure 1, on prévoit un profilé 3 fixé contre la pièce 1, par exemple par l'intermédiaire d'une patte 4 et de vis 5.

Le profilé 3 comporte une enveloppe 6 à l'intérieur de laquelle sont disposés deux cordeaux pyrotechniques 7 et 8. Les cordeaux pyrotechniques 7 et 8 sont maintenus dans l'enveloppe 6 par l'intermédiaire d'une matière de remplissage 9.

Chaque cordeau 7 et 8 est constitué par une gaine a en plomb ou en aluminium, renfermant une âme b d'explosif pulvérulent, par exemple de l'hexogène. La section de chacun des cordeaux pyrotechniques 7 et 8 présente la forme au moins approximative d'un croissant et le plan médian longitudinal respectif 7.1 et 8.1 est incliné par rapport au plan normal 10 à la pièce 1. Ces plans longitudinaux médian 7.1 et 8.1 correspondent aux plans directifs de découpe associés auxdits cordeaux. Comme on peut le voir sur la figure 1, les deux plans 7.1 et 8.1 convergent en direction de la pièce 1 et se coupent sur la ligne de découpe 2 à obtenir.

Dans la variante de réalisation de la figure 2, les deux cordeaux pyrotechniques 7 et 8, au lieu d'être disposés d'un même côté de la pièce 1, sont disposés de part et d'autre de celle-ci. Ils sont respectivement enfermés dans des boîtiers 12 et 13 rendus solidaires de ladite pièce. Leurs plans de découpe respectifs 7.1 et 8.1 convergent l'un vers l'autre et se coupent sur la ligne de découpe 2 à obtenir.

Bien entendu, chacun des boîtiers 12,13 est fixé de manière appropriée à la pièce 1, par exemple au moyen de pattes 4 et de vis 5.

Il va de soi que, sur la figure 1, il serait également possible de prévoir des cordeaux 7 et 8 maintenus dans des profilés individuels, et non pas dans un profilé 3 commun.

On voit ainsi que grâce à l'invention, puisque les deux cordeaux 7 et 8 sont susceptibles de partager la pièce 1 en deux parties 1a et 1b le long de la même ligne de séparation 2, on est sûr d'obtenir une telle séparation, sans bande intermédiaire parasite, même si un seul des deux cordeaux pyrotechniques fonctionne. Il est également évident que, puisque les deux cordeaux sont disposés côte à côte, il est possible de les initier à partir d'un détonateur unique.

## Revendications

1. Procédé pour la découpe d'une pièce (1) au moyen d'au moins deux cordeaux pyrotechniques (7,8) par projection de particules métalliques dans le plan longitudinal médian de chacun desdits cordeaux formant plan de découpe, la projection de particules métalliques dans chacun desdits plans étant susceptible à elle seule de découper ladite pièce,
caractérisé en ce que l'on oriente lesdits plans de découpe (7.1, 8.1) obliquement par rapport à ladite pièce (1), de façon qu'ils convergent sur ladite pièce et se coupent sur celle-ci.

2. Procédé selon la revendication 1 mettant en oeuvre deux plans de découpe,
caractérisé en ce que lesdits plans de découpe (7.1 et 8.1) sont orientés d'au moins approximativement 45° par rapport à ladite pièce.

3. Dispositif pour la découpe d'une pièce (1) au moyen d'au moins deux cordeaux pyrotechniques (7 et 8) à découpe directive, par projection de particules métalliques dans le plan longitudinal médian de chacun desdits cordeaux formant plan de découpe, chaque cordeau étant susceptible à lui seul de découper ladite pièce, et lesdits cordeaux présentant une section en forme de croissant et étant disposés dans des supports fixés sur ladite pièce,
caractérisé en ce que lesdits cordeaux (7,8) sont orientés obliquement par rapport à ladite pièce (1), de façon que leurs plans de découpe (7.1, 8.1) convergent sur ladite pièce et se coupent sur celle-ci.

4. Dispositif selon la revendication 3,
caractérisé en ce que lesdits cordeaux (7,8) et leurs supports (12,13) sont disposés de part et d'autre de ladite pièce (1).

5. Dispositif selon la revendication 3,
caractérisé en ce que lesdits cordeaux et leurs supports sont disposés d'un même côté de ladite pièce.

6. Dispositif selon la revendication 5,
caractérisé en ce que lesdits cordeaux sont contenus dans un boîtier commun formé par lesdits supports.

7. Dispositif selon l'une quelconque des revendications 3 ou 6,
caractérisé en ce qu'il comporte deux cordeaux.

8. Dispositif selon la revendication 7,
caractérisé en ce que les plans de découpe des deux cordeaux sont inclinés d'au moins approximativement 45° par rapport à ladite pièce.

## Claims

1. Method for cutting a part (1) using at least two detonating cords (7, 8) by ejection of metal particles in the longitudinal mid plane of each of the said cords forming a cutting plane, the ejection of metal particles in each of the said planes being by itself capable of cutting the said part, characterized in that the said cutting planes (7.1, 8.1) are directed obliquely with respect to the said part (1), so that they converge on the said part and intersect thereon.

2. Method according to Claim 1, employing two cutting planes, characterized in that the said cutting planes (7.1 and 8.1) are directed at at least approximately 45° with respect to the said part.

3. Device for cutting a part (1) using at least two detonating cords (7 and 8) with directional cutting, by ejection of metal particles in the longitudinal mid plane of each of the said cords forming a cutting plane, each cord being capable by itself of cutting the said part, and said cords having a cross-section of crescent shape and being arranged in supports fixed on the said part, characterized in that the said cords (7, 8) are directed obliquely with respect to the said part (1), so that their cutting planes (7.1, 8.1) converge on the said part and intersect thereon.

4. Device according to Claim 3, characterized in that the said cords (7, 8) and their supports (12, 13) are arranged on either side of the said part (1).

5. Device according to Claim 3, characterized in that the said cords and their supports are arranged on one and the same side of the said part.

6. Device according to Claim 5, characterized in that the said cords are contained in a common casing formed by the said supports.

7. Device according to either one of Claims 3 or 6, characterized in that it includes two cords.

8. Device according to Claim 7, characterized in that the cutting planes of the two cords are inclined by at least approximately 45° with respect to the said part.

## Patentansprüche

1. Verfahren zum Trennen eines Teils (1) mit Hilfe von mindestens zwei Sprengschnüren (7,8) durch Metallteilchenprojektion in der mittleren die Trennebene bildenden Längsebene jeder der Schnüre, wobei die Metallteilchenprojektion in jeder der Ebenen allein zur Trennung des Teils genügt,
dadurch gekennzeichnet, daß die Trennebenen (7.1, 8.1) quer zum Teil (1) ausgerichtet werden, so daß sie am Teil zusammenlaufen und sich an diesem schneiden.

2. Verfahren nach Anspruch 1 mit zwei Trennebenen,
dadurch gekennzeichnet, daß die Ausrichtung der Trennebenen (7.1 und 8.1) gegenüber dem Teil mindestens etwa 45° beträgt.

3. Vorrichtung zum Trennen eines Teils (1) mit Hilfe von mindestens zwei Richttrenn-Sprengschnüren (7 und 8) durch Metallteilchenprojektion in der mittleren die Trennebene bildenden Längsebene jeder der Schnüre, wobei jede der Schnüre allein das Teil trennen kann und die Schnüre einen halbmondförmigen Querschnitt haben und in Haltern, die am Teil befestigt sind, angeordnet sind,
dadurch gekennzeichnet, daß die Schnüre (7,8) quer zum Teil (1) ausgerichtet sind, so daß ihre Trennebenen (7.1, 8.1) am Teil zusammenlaufen und sich an diesem schneiden.

4. Vorrichtung nach Anspruch 3,
dadurch gekennzeichnet, daß die Schnüre (7,8) und ihre Halter (12,13) beiderseits von Teil (1) angeordnet sind.

5. Vorrichtung nach Anspruch 3,
dadurch gekennzeichnet, daß die Schnüre und ihre Halter auf einer Seite des Teils angeordnet sind.

6. Vorrichtung nach Anspruch 5,
dadurch gekennzeichnet, daß sich die Schnüre in einem von den Haltern gebildeten gemeinsamen Gehäuse befinden.

7. Vorrichtung nach einem der Ansprüche 3 oder 6,
dadurch gekennzeichnet, daß sie zwei Schnüre hat.

8. Vorrichtung nach Anspruch 7,
dadurch gekennzeichnet, daß die Trennebenen der beiden Schnüre mindestens etwa 45° gegenüber dem Teil geneigt sind.
